# EUROPEAN PATENT APPLICATION

(11) **EP 4 822 550 A1**
(43) Date of publication of application: **14.10.2026**
(21) Application number: 24910295.5
(22) Date of filing: 31.10.2024
(51) Int. Cl.: G06F 16/27, G06F 16/22, G06F 16/2455

(54) **PARALLEL SCANNING METHOD, APPARATUS, DEVICE, STORAGE MEDIUM AND COMPUTER PROGRAM**

(30) Priority: 29.12.2023 CN 202311864350
(71) Applicant: Huawei Technologies Co., Ltd., Shenzhen, Guangdong 518129 (CN)
(72) Inventor: ZHOU, Zhaoqi, Shenzhen, Guangdong 518129 (CN); LIU, Baozhu, Shenzhen, Guangdong 518129 (CN); WU, Chenghong, Shenzhen, Guangdong 518129 (CN); WEI, Chen, Shenzhen, Guangdong 518129 (CN); WANG, Jiang, Shenzhen, Guangdong 518129 (CN)
(74) Representative: Pfenning, Meinig & Partner mbB
(86) International application number: PCT/CN2024/129021
(87) International publication number: WO 2025/139357

(57) **Abstract**

This application discloses a parallel scanning method and apparatus, a device, a storage medium, and a computer program, and pertains to the field of database technologies. The method includes: determining at least one target physical block from multiple physical blocks based on a data query condition; allocating the at least one target physical block to multiple processing units based on a total quantity of the at least one target physical block and a quantity of parallel processing units; and scanning, by using the multiple processing units, the target physical block allocated to the respective processing unit, and determining, based on a scanning result of the multiple processing units, data that meets the data query condition. In this application, a waste of compute resources of the processing units can be effectively avoided, and data query efficiency of a database can be improved. In addition, there is no need to obtain tasks serially, and each processing unit can scan a target physical block allocated to the processing unit, thereby greatly improving data query efficiency and improving user experience.

## Description

This application claims priority to Chinese Patent Application No. 202311864350.8, filed on December 29, 2023 and entitled "PARALLEL SCANNING METHOD AND APPARATUS, DEVICE, STORAGE MEDIUM, AND COMPUTER PROGRAM", which is incorporated herein by reference in its entirety.

### TECHNICAL FIELD

This application relates to the field of database technologies, and in particular, to a parallel scanning method and apparatus, a device, a storage medium, and a computer program.

### BACKGROUND

With the development of computer hardware technologies, a symmetric multi-processing (symmetric multi-processing, SMP) technology is increasingly applied to databases to improve database query performance. The SMP technology is a technology in which a multi-core CPU architecture of a computer is used to implement parallel computation of multiple threads and CPU resources are fully used to improve query performance. The multiple threads can exchange data and information in a same process by using various inter-thread synchronization technologies, to reduce occupation of compute resources and improve effective utilization of system compute resources.

In related technologies, when a user queries target data from a database, the database can form a task queue by using multiple physical blocks storing data. In this way, the multiple threads can sequentially obtain a next to-be-scanned physical block from the task queue, scan the physical block based on a query condition, and then determine a query result of the target data based on a scanning result of the multiple threads. The multiple threads obtain the next to-be-scanned physical block serially, and scan, in parallel, the physical storage block obtained by the respective thread, that is, the multiple threads obtain tasks serially, and perform scanning in parallel.

However, because a procedure in which the multiple threads obtain the tasks is a serial procedure, waiting time of the multiple threads is long, and processing efficiency is reduced. In addition, when there are a large quantity of threads and a small amount of data in the physical block, the multiple threads need to frequently obtain tasks from the task queue. Consequently, the threads are in a waiting state for most of the time, data query efficiency is greatly reduced, and user experience is affected.

### SUMMARY

This application provides a parallel scanning method and apparatus, a device, a storage medium, and a computer program, to resolve a problem of low data query efficiency in related technologies. The technical solutions are as follows:

According to a first aspect, a parallel scanning method is provided, applied to a first data node included in a database, where the first data node includes multiple physical blocks, and the method includes: determining at least one target physical block from the multiple physical blocks based on a data query condition, where the target physical block is a physical block related to to-be-queried data, and the data query condition is a condition met by the to-be-queried data; allocating the at least one target physical block to multiple processing units based on a total quantity of the at least one target physical block and a quantity of parallel processing units, where the multiple processing units are processing units that perform data query in a parallel scanning manner, and the quantity of parallel processing units is a quantity of the multiple processing units; and scanning, by using the multiple processing units, the target physical block allocated to the respective processing unit, and determining, based on a scanning result of the multiple processing units, data that meets the data query condition.

In this application, the at least one target physical block can be determined from the multiple physical blocks based on the data query condition. Because the target physical block can be the physical block related to the to-be-queried data, a waste of compute resources of the processing units can be effectively avoided, and data query efficiency of the database can be improved. In addition, in this application, the at least one target physical block can be further allocated to the multiple processing units based on the total quantity of the at least one target physical block and the quantity of parallel processing units. Compared with related technologies in which tasks need to be obtained serially, in this application, there is no need to obtain tasks serially, and each processing unit can scan a target physical block allocated to the processing unit, thereby greatly improving data query efficiency and improving user experience.

In actual application, the first data node stores a target base table, where the target base table is a base table having the to-be-queried data, and the first data node may further store at least one index directory corresponding to the target base table. In this case, the data query condition may indicate the first data node to query data from the target base table, or may indicate the first data node to query data from one of the at least one index directory. When content indicated by different data query conditions is different, implementations of determining the at least one target physical block from the multiple physical blocks based on the data query condition are different. The following separately provides descriptions.

When the data query condition indicates the first data node to query the data from the target base table, the data query condition includes a constraint condition of at least one query field and a base table identifier, the base table identifier indicates a target base table, and the multiple physical blocks are used to store the target base table. In this case, the first data node can directly determine the multiple physical blocks as the at least one target physical block.

When the data query condition indicates the first data node to query the data from the index directory of the target base table, the data query condition includes a constraint condition of at least one query field and an index directory identifier, the index directory identifier indicates a target index directory, the target index directory is an index directory constructed based on data (also referred to as a target base table) stored in the first data node, the target index directory is one of the at least one index directory corresponding to the target base table, and the multiple physical blocks are used to store the target index directory. In this case, if a sorting field in the target index directory is present in the at least one query field, the at least one target physical block is determined from the multiple physical blocks based on a constraint condition of the sorting field and the target index directory, where an index stored in the target physical block meets the constraint condition of the sorting field.

Because the target index directory is constructed based on the sorting field (also referred to as an index field), if the sorting field in the target index directory is present in the query field, the first data node can directly select, from the target index directory based on the constraint condition of the sorting field, the index that meets the constraint condition of the sorting field. In this way, an index that does not meet the constraint condition of the sorting field can be filtered out, to effectively avoid the waste of the compute resources of the processing units subsequently and improve data query efficiency of the database.

Optionally, if the sorting field in the target index directory is absent in the at least one query field, the multiple physical blocks are determined as the at least one target physical block.

If the sorting field in the target index directory is absent in the query field, the first data node cannot filter the multiple physical blocks based on the target index directory. Therefore, the multiple physical blocks may be directly determined as the at least one physical block.

It should be noted that in actual application, the data query condition may not include the constraint condition of the query field. In this case, a data query instruction instructs the first data node to perform full-table query on the target base table indicated by the base table identifier, or the target index directory indicated by the index directory identifier. If the data query condition includes the base table identifier, the first data node uses, as the at least one target physical block, multiple physical blocks in which the target base table indicated by the base table identifier is located; or if the data query condition includes the index directory identifier, the first data node uses, as the at least one target physical block, multiple physical blocks in which the target index directory indicated by the index directory identifier is located.

In actual application, the database further includes a coordinator node. Before determining the at least one target physical block from the multiple physical blocks based on the data query condition, the first data node may further receive a data query instruction sent by the coordinator node, where the data query instruction is determined by the coordinator node based on a data query request sent by a user, and the data query instruction includes the data query condition.

Optionally, when the user needs to query data, the user can send the data query request to the coordinator node, where the data query request indicates a base table in which the to-be-queried data of the user is located and a constraint condition of the to-be-queried data of the user. In this case, the coordinator node in the database determines, based on the base table in which the to-be-queried data of the user is located, distribution, in a data node, of the base table in which the to-be-queried data of the user is located, determines, from data nodes included in the database based on the distribution and the constraint condition of the to-be-queried data of the user, at least one second data node that needs to perform data query, and determines a data query instruction respectively corresponding to the at least one second data node. For each of the at least one second data node, the coordinator node sends a data query instruction corresponding to the second data node to the second data node, to instruct the second data node to perform data query and whether to perform data query in a parallel scanning manner.

Optionally, the at least one second data node includes at least one first data node, and a data query instruction corresponding to the first data node instructs the first data node to perform data query in a parallel scanning manner. In this case, the first data node can receive the data query instruction sent by the coordinator node.

Optionally, the multiple processing units may be multiple processes in the first data node or may be multiple threads in the first data node.

Optionally, the total quantity of the at least one target physical block is divided by the quantity of parallel processing units to obtain a candidate quantity, and if the candidate quantity is an integer, the at least one target physical block is allocated to the multiple processing units based on the candidate quantity, so that a quantity of target physical blocks allocated to each processing unit is the candidate quantity.

Optionally, if the candidate quantity is not the integer, the candidate quantity is rounded up to obtain a target quantity, and the at least one target physical block is allocated to the multiple processing units based on the target quantity and the quantity of parallel processing units, so that the quantity of target physical blocks allocated to each processing unit is not greater than the target quantity.

The at least one target physical block is allocated to N processing units in the multiple processing units based on the target quantity, so that quantities of target physical blocks allocated to the N processing units are the target quantity, where N is equal to the quantity of parallel processing units minus 1. If a value obtained by N multiplied by the target quantity is less than the total quantity of the at least one target physical block, the at least one target physical block is allocated to a remaining processing unit based on a first difference, where the remaining processing unit is a processing unit in the multiple processing units except the N processing units, and the first difference is a difference between the value obtained by N multiplied by the target quantity and the total quantity of the at least one target physical block. If the value obtained by N multiplied by the target quantity is not less than the total quantity of the at least one target physical block, the target physical block is not allocated to the remaining processing unit.

If the value obtained by N multiplied by the target quantity is less than the total quantity of the at least one target physical block, it indicates that a total quantity of physical blocks allocated to the N processing units is less than the total quantity of the at least one target physical block, there is still an unallocated physical block in the at least one target physical block, and a quantity of unallocated physical blocks is the first difference. Therefore, target physical blocks whose quantity is the first difference may be allocated to the remaining processing unit. If the value obtained by N multiplied by the target quantity is not less than the total quantity of the at least one target physical block, it indicates that the total quantity of physical blocks allocated to the N processing units is not less than the total quantity of the at least one target physical block, and there is no unallocated physical block in the at least one target physical block. Therefore, the target physical block may not be allocated to the remaining processing unit.

Based on the foregoing descriptions, when the candidate quantity is not the integer, the candidate quantity may be rounded up. In actual application, alternatively, the candidate quantity may be rounded down to obtain a target quantity. In this case, a quantity of target physical blocks allocated to at least one of the multiple threads is not greater than the target quantity.

Optionally, the data query instruction further includes the quantity of parallel processing units. In this case, the first data node can determine the quantity of parallel processing units.

Because the first data node may query data from the target base table, or may query data from the target index directory, in different cases, manners of scanning, by using the multiple processing units, the target physical block allocated to the respective processing unit, and determining, based on the scanning result of the multiple processing units, the data that meets the data query condition are different.

When the first data node queries the data from the target base table, the multiple processing units can scan the target physical block allocated to the respective processing unit, and determine the data that meets the data query condition from the at least one target physical block.

In actual application, a leaf node of the target index directory may store data identifiers respectively corresponding to indexes in a second value range of the leaf node, or the leaf node may store specific data respectively corresponding to the indexes in the second value range of the leaf node, where the data identifier can indicate data corresponding to the index. For example, a primary key index directory is usually used to store specific data corresponding to the index in the leaf node.

When the first data node queries the data from the target index directory, if content stored in leaf nodes of the target index directory is different, manners in which the multiple processing units can scan the target physical block allocated to the respective processing unit, and determine the data that meets the data query condition from the at least one target physical block are different. The following separately provides descriptions.

If the leaf node of the target index directory stores the specific data corresponding to the index, the multiple processing units can scan the target physical block allocated to the respective processing unit, and determine the data that meets the data query condition from the at least one target physical block.

If the leaf node of the target index directory stores the data identifier corresponding to the index, the multiple processing units can scan the target physical block allocated to the respective processing unit. For each of the multiple processing units, the processing unit can determine a data identifier respectively corresponding to at least one index that meets the data query condition in the at least one target physical block, and perform table lookup based on the at least one data identifier, to obtain the data that meets the data query condition.

Optionally, after determining, based on the scanning result of the multiple processing units, the data that meets the data query condition, the first data node may further determine a data query result based on the data that meets the data query condition, and then send the data query result to the coordinator node.

According to a second aspect, a parallel scanning apparatus is provided. The parallel scanning apparatus has a function of implementing behavior of the parallel scanning method in the first aspect. The parallel scanning apparatus includes at least one module, and the at least one module is configured to implement the parallel scanning method provided in the first aspect.

According to a third aspect, a computer device is provided. The computer device includes a processor and a memory, and the memory is configured to store a computer program for performing the parallel scanning method provided in the first aspect. The processor is configured to execute the computer program stored in the memory, to implement the parallel scanning method in the first aspect.

Optionally, the computer device may further include a communication bus, and the communication bus is configured to establish a connection between the processor and the memory.

According to a fourth aspect, a computer-readable storage medium is provided. The storage medium stores instructions, and when the instructions are run on a computer, the computer is enabled to perform steps of the parallel scanning method in the first aspect.

According to a fifth aspect, a computer program product including instructions is provided. When the instructions are run on a computer, the computer is enabled to perform steps of the parallel scanning method in the first aspect. In other words, a computer program is provided. When the computer program is run on a computer, the computer is enabled to perform steps of the parallel scanning method in the first aspect.

Technical effects achieved in the second aspect, the third aspect, the fourth aspect, and the fifth aspect are similar to technical effects achieved by the corresponding technical means in the first aspect. Details are not described herein again.

### BRIEF DESCRIPTION OF DRAWINGS

FIG. 1 is a diagram of an implementation environment according to an embodiment of this application;
FIG. 2 is a diagram of a structure of a computer device according to an embodiment of this application;
FIG. 3 is a flowchart of a parallel scanning method according to an embodiment of this application;
FIG. 4 is a diagram of multiple threads according to an embodiment of this application;
FIG. 5 is a flowchart of another parallel scanning method according to an embodiment of this application;
FIG. 6 is a diagram of a target physical block according to an embodiment of this application;
FIG. 7 is a diagram of a scanning range of a 1^{st} thread according to an embodiment of this application;
FIG. 8 is a diagram of a scanning range of a 2^{nd} thread according to an embodiment of this application; and
FIG. 9 is a diagram of a structure of a parallel scanning apparatus according to an embodiment of this application.

### DESCRIPTION OF EMBODIMENTS

To make the objectives, technical solutions, and advantages of embodiments of this application clearer, the following further describes implementations of this application in detail with reference to the accompanying drawings.

For ease of understanding, before a parallel scanning method provided in embodiments of this application are described in detail, nouns, application scenarios, and implementation environments in embodiments of this application are first described.

First, the nouns in embodiments of this application are described.

**Symmetric multi-processing (symmetric multi-processing, SMP):** is a technology in which a multi-core CPU architecture of a computer is used to implement parallel computation of multiple threads and central processing unit (central processing unit, CPU) resources are fully used to improve database query performance.

**Distributed database:** is a logically unified database formed by connecting multiple physically dispersed database units by using computer networks. Each connected database unit is referred to as a data site or a data node.

**Centralized database:** means that data in a database is stored on a physical device, and data processing is also performed on the physical device.

**Base table:** namely, table (table). The table is an object used to store data in a database, is a set of structured data and is the basis of an entire database system. The table is a database object that includes all data in the database. The table is defined as a set of columns.

**Index (index directory):** is a data structure that sorts values of one or more fields (one or more columns) in a base table to help quickly query and update data in a database table.

**NULL value:** The null value is a special mark used in a structured query language, is an identifier for unknown or missing data attributes, and indicates an indeterminate value in a database.

**Primary key (primary key):** A table often includes one or a combination of multiple columns, and a value of the primary key can uniquely identify each row in the table. Such one or more columns are referred to as the primary key of the table, which can be used to enforce entity integrity of the table.

**Point query:** is to query a specific value, for example, query data of a specific identity number (identity document, ID).

**Range query:** is to query values in a range, for example, query data in a time range.

The following further describes the foregoing point query and range query by using an example. It is assumed that there is a student portfolio, where the student portfolio includes two fields: a student ID and a student class. In this case, if a user needs data of a student whose student ID is 500, this query is point query. If the user needs to query data of students whose student IDs are greater than 500 and student IDs are less than 1000, this query is range query.

The following describes the application scenarios in embodiments of this application.

A database is a data storage and management technology, and is an essential part of computer application systems. The database provides a manner of organizing, storing, and managing a large amount of data, and supports operations such as querying, updating, and deleting data. As a core component of modern information systems, databases are widely applied to various fields, such as finance, healthcare, education, and e-commerce. With the development of computer hardware technologies, a symmetric multi-processing (symmetric multi-processing, SMP) technology is increasingly applied to the databases to improve database query performance. The SMP technology is a technology in which a multi-core CPU architecture of a computer is used to implement parallel computation of multiple threads and CPU resources are fully used to improve query performance. The multiple threads can exchange data and information in a same process by using various inter-thread synchronization technologies, to reduce occupation of compute resources and improve effective utilization of system compute resources.

In related technologies, when a user queries target data from a database, the database can form a task queue by using multiple physical blocks storing data. In this way, the multiple threads can sequentially obtain a next to-be-scanned physical block from the task queue, scan the physical block based on a query condition, and then determine a query result of the target data based on a scanning result of the multiple threads. The multiple threads obtain the next to-be-scanned physical block serially, and scan, in parallel, the physical storage block obtained by the respective thread, that is, the multiple threads obtain tasks serially, and perform scanning in parallel.

For example, the multiple physical storage blocks storing the data in the database are respectively 1 to 4, an order of the four physical blocks in the task queue is 1 to 4, and currently, two threads (that is, a thread 1 and a thread 2) scan the multiple physical blocks. A next to-be-scanned physical block obtained by the thread 1 from the task queue is the physical block 1. After obtaining a task, the thread 1 scans the physical block 1. After the thread 1 obtains the task, the thread 2 obtains a next to-be-scanned physical block, that is, the physical block 2, from the task queue, and then scans the physical block 2. Scanning performed by the thread 1 on the physical block 1 and scanning performed by the thread 2 on the physical block 2 are parallel. If the thread 1 first completes scanning of the physical block 1, the thread 1 continues to obtain a next to-be-scanned physical block, that is, the physical block 3, from the task queue. If the thread 2 first completes scanning of the physical block 2, the thread 2 can obtain a next to-be-scanned physical block, that is, the physical block 4, from the task queue only after the thread 1 completes scanning of the physical block 1 and obtains the physical block 3.

However, because a procedure in which the multiple threads obtain the tasks is a serial procedure, waiting time of the multiple threads is long, and processing efficiency is reduced. In addition, when there are a large quantity of threads and a small amount of data in the physical block, the multiple threads need to frequently obtain tasks from the task queue. Consequently, the threads are in a waiting state for most of the time, data query efficiency is greatly reduced, and user experience is affected. In addition, because not all physical blocks in the multiple physical blocks store target data, that is, the multiple physical blocks include a physical block that does not store target data and a physical block that stores target data, only scanning performed by the thread on the physical block that stores the target data is valid, but the thread can learn, only when scanning a physical block, whether the physical block stores the target data. If a next to-be-scanned physical block obtained by the thread does not store the target data, the thread needs to scan the physical block to learn that the physical block does not store the target data, and then obtains a next task from the task queue. In this case, scanning performed by the thread on the physical block that does not store the target data is invalid. Consequently, compute resources of the thread are wasted, and data query efficiency of the database is greatly reduced.

Based on this, embodiments of this application provide a parallel scanning method, so that at least one target physical block can be determined from multiple physical blocks based on a data query condition. Because the target physical block can be a physical block related to to-be-queried data, a waste of compute resources of processing units can be effectively avoided, and data query efficiency of a database can be improved. In addition, in embodiments of this application, the at least one target physical block can be further allocated to multiple processing units based on a total quantity of the at least one target physical block and a quantity of parallel processing units. Compared with related technologies in which tasks need to be obtained serially, in embodiments of this application, there is no need to obtain tasks serially, and each processing unit can scan a target physical block allocated to the processing unit, thereby greatly improving data query efficiency and improving user experience.

The parallel scanning method provided in embodiments of this application is performed by a first data node included in the database. The first data node is a data node that performs data query in a parallel scanning manner. The database may be a distributed database, or may be a centralized database. This is not limited in embodiments of this application.

The following describes the implementation environments in embodiments of this application.

Based on the foregoing descriptions, the database provided in embodiments of this application may be the distributed database, or may be the centralized database. The following separately provides descriptions.

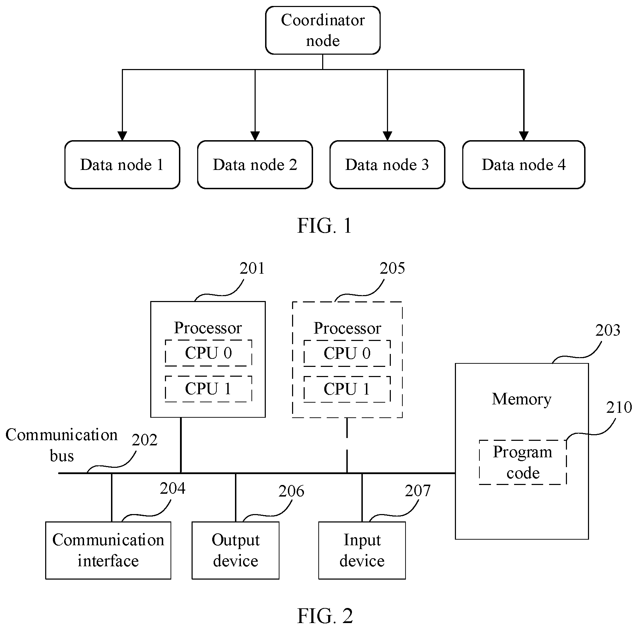

**When the database in embodiments of this application is the distributed database**, FIG. 1 is a diagram of an implementation environment according to an embodiment of this application. The implementation environment includes a coordinator node and multiple data nodes (in FIG. 1, four data nodes are used as an example to represent the multiple data nodes), the data node is configured to store data in a database, and the coordinator node is configured to manage the multiple data nodes.

It should be noted that the coordinator node may be any one of the multiple data nodes, or may be a node other than the multiple data nodes. When the coordinator node is any one of the multiple data nodes, the coordinator node can be configured to store data in the database, and can also manage data of the coordinator node and data of another data node.

In the following description, the coordinator node and the multiple data nodes are different nodes.

When a user needs to query data, the user can send a data query request to the coordinator node. The coordinator node determines, from the multiple data nodes based on the data query request sent by the user, at least one second data node that needs to perform data query, and determines a data query instruction respectively corresponding to the at least one second data node. For each of the at least one second data node, the coordinator node sends a data query instruction corresponding to the second data node to the second data node, to instruct the second data node to perform data query and a data query manner. The second node can receive the data query instruction sent by the coordinator node, and then perform data query based on the data query instruction, to obtain a data query result. Further, the second data node can send the data query result to the coordinator node. The coordinator node can receive a data query result sent by each second data node, then determine a target data query result based on the data query result, and return the target data query result to the user.

It should be noted that when the coordinator node is any one of the multiple data nodes, and the at least one second data node includes the coordinator node, the coordinator node can indicate the coordinator node to perform data query, to obtain a data query result.

In some embodiments, the at least one second data node includes at least one first data node, a data query instruction corresponding to the first data node instructs the first data node to perform data query in a parallel scanning manner, and the data query instruction includes a data query condition. In this case, for each of the at least one first data node, after receiving the data query instruction sent by the coordinator node, the first data node can determine at least one target physical block from the multiple physical blocks based on the data query condition, then allocate the at least one target physical block to multiple processing units based on a total quantity of the at least one target physical block and a quantity of parallel processing units, where the multiple processing units are processing units that perform data query in a parallel scanning manner, scan, by using the multiple processing units, the target physical block allocated to the respective processing unit, determine, based on a scanning result of the multiple processing units, data that meets the data query condition, and further determine a data query result based on the data that meets the data query condition.

It should be further noted that when the coordinator node is any one of the multiple data nodes, and the at least one first data node includes the coordinator node, the coordinator node can determine a data query condition of the coordinator node, determine at least one target physical block from the multiple physical blocks based on the data query condition, and finally obtain a data query result.

**When the database in embodiments of this application is the centralized database**, the centralized database includes only one data node. In this case, the data node also has a function of the coordinator node. To be specific, when a user needs to query data, the user can send a data query request to the data node, and the data node indicates, based on the data query request sent by the user, the data node to perform data query, to obtain a target data query result, and returns the target data query result to the user.

In some embodiments, when the data node indicates the data node to perform data query in a parallel scanning manner, the data node is also referred to as a first data node. The first data node can determine a data query condition of the first data node, determine at least one target physical block from the multiple physical blocks based on the data query condition, then allocate the at least one target physical block to multiple processing units based on a total quantity of the at least one target physical block and a quantity of parallel processing units, where the multiple processing units are processing units that perform data query in a parallel scanning manner, scan, by using the multiple processing units, the target physical block allocated to the respective processing unit, and determine, based on a scanning result of the multiple processing units, data that meets the data query condition, and further determine a target data query result based on the data that meets the data query condition.

A person skilled in the art should understand that the foregoing coordinator node and data node are merely examples. Other existing or future possible coordinator nodes and data nodes that are applicable to embodiments of this application shall also fall within the protection scope of embodiments of this application, and are incorporated herein by reference.

It should be noted that the application scenarios and the implementation environments that are described in embodiments of this application are intended to describe the technical solutions in embodiments of this application more clearly, and do not constitute a limitation on the technical solutions provided in embodiments of this application. A person of ordinary skill in the art may be aware that as technologies evolve and new application scenarios emerge, the technical solutions provided in embodiments of this application are also applicable to similar technical problems.

FIG. 2 is a diagram of a structure of a computer device according to an embodiment of this application. The computer device may be a part or all of the foregoing first data node. The computer device includes at least one processor 201, a communication bus 202, a memory 203, and at least one communication interface 204.

The processor 201 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 202 is configured to transfer information between the foregoing components. The communication bus 202 may be classified into an address bus, a data bus, a control bus, or the like. For ease of representation, only one bold line is used for representation in the figure, but this does not mean that there is only one bus or only one type of bus.

The memory 203 may be a read-only memory (read-only memory, ROM), a random access memory (random access memory, RAM), an electrically erasable programmable read-only memory (electrically erasable programmable read-only memory, EEPROM), an optical disc (which includes a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be configured to carry or store expected program code in a form of instructions or a data structure and that can be accessed by a computer, but is not limited thereto. The memory 203 may exist independently, and is connected to the processor 201 through the communication bus 202. The memory 203 may alternatively be integrated with the processor 201.

The communication interface 204 is configured to communicate with another device or a communication network by using any apparatus such as a transceiver. The communication interface 204 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 201 may include one or more CPUs, for example, a CPU 0 and a CPU 1 shown in FIG. 2.

During specific implementation, in an embodiment, the computer device may include multiple processors, for example, the processor 201 and a processor 205 shown in FIG. 2. Each of the processors may be a single-core processor, or may be a multi-core processor. The processor herein may be one or more devices, circuits, and/or processing cores configured to process data (for example, computer program instructions).

During specific implementation, in an embodiment, the computer device may further include an output device 206 and an input device 207. The output device 206 communicates with the processor 201, and may display information in multiple manners. For example, the output device 206 may be a liquid crystal display (liquid crystal display, LCD), a light emitting diode (light emitting diode, LED) display device, a cathode ray tube (cathode ray tube, CRT) display device, or a projector (projector). The input device 207 communicates with the processor 201, and may receive an input from a user in multiple manners. For example, the input device 207 may be a mouse, a keyboard, a touchscreen device, or a sensing device.

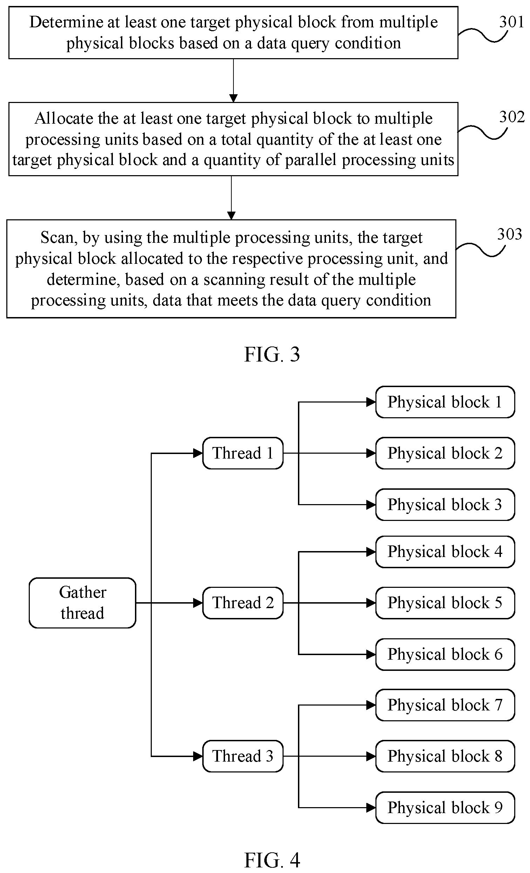

In some embodiments, the memory 203 is configured to store program code 210 for performing the solutions of this application, and the processor 201 may execute the program code 210 stored in the memory 203. The program code 210 may include one or more software modules. The computer device may implement, by using the processor 201 and the program code 210 in the memory 203, a parallel scanning method provided in an embodiment in FIG. 3 below.

FIG. 3 is a flowchart of a parallel scanning method according to an embodiment of this application. The method is applied to a first data node included in a database, and the first data node includes multiple physical blocks. With reference to FIG. 3, the method includes the following steps.

**Step 301:** Determine at least one target physical block from the multiple physical blocks based on a data query condition, where the target physical block is a physical block related to to-be-queried data, and the data query condition is a condition met by the to-be-queried data.

In actual application, the first data node stores a target base table, where the target base table is a base table having the to-be-queried data, and the first data node may further store at least one index directory corresponding to the target base table. In this case, the data query condition may indicate the first data node to query data from the target base table, or may indicate the first data node to query data from one of the at least one index directory. When content indicated by different data query conditions is different, implementations of determining the at least one target physical block from the multiple physical blocks based on the data query condition are different. The following separately provides descriptions.

**When the data query condition indicates the first data node to query the data from the target base table,** the data query condition includes a constraint condition of at least one query field and a base table identifier, the base table identifier indicates a target base table, and the multiple physical blocks are used to store the target base table. In this case, the first data node can directly determine the multiple physical blocks as the at least one target physical block.

**When the data query condition indicates the first data node to query the data from the index directory of the target base table,** the data query condition includes a constraint condition of at least one query field and an index directory identifier, the index directory identifier indicates a target index directory, the target index directory is an index directory constructed based on data (also referred to as a target base table) stored in the first data node, the target index directory is one of the at least one index directory corresponding to the target base table, and the multiple physical blocks are used to store the target index directory. In this case, if a sorting field in the target index directory is present in the at least one query field, the at least one target physical block is determined from the multiple physical blocks based on a constraint condition of the sorting field and the target index directory, where an index stored in the target physical block meets the constraint condition of the sorting field.

Because the target index directory is constructed based on the sorting field (also referred to as an index field), if the sorting field in the target index directory is present in the query field, the first data node can directly select, from the target index directory based on the constraint condition of the sorting field, the index that meets the constraint condition of the sorting field. In this way, an index that does not meet the constraint condition of the sorting field can be filtered out, to effectively avoid the waste of the compute resources of the processing units subsequently and improve data query efficiency of the database.

In some embodiments, the target index directory includes multiple child nodes, each child node further includes at least one leaf node, the multiple child nodes respectively correspond to multiple first value ranges, and the multiple first value ranges do not overlap. For each child node, at least one leaf node included in the child node respectively corresponds to at least one second value range, the at least one second value range does not overlap, a union set of the at least one second value range is the same as a first value range of the child node, and the first value range and the second value range are value ranges of the index (also referred to as the sorting field) in the target index directory.

If the constraint condition of the sorting field is point query, a first child node corresponding to a constraint value is determined from the multiple child nodes based on the constraint value in the constraint condition and the first value ranges corresponding to the multiple child nodes of the target index directory, a leaf node corresponding to the constraint value is determined from at least one leaf node based on a second value range of the at least one leaf node included in the first child node, and a physical block in which the leaf node corresponding to the constraint value is located is used as a target physical block.

In some embodiments, second value ranges of the foregoing leaf nodes are different, and the leaf nodes are arranged in descending order or in ascending order of maximum values (or minimum values) in the value ranges.

If the constraint condition of the sorting field is range query, a second child node corresponding to a maximum constraint value and a third child node corresponding to a minimum constraint value are determined from the first value ranges corresponding to the multiple child nodes of the target index directory based on the maximum constraint value and the minimum constraint value in the constraint condition, a leaf node corresponding to the maximum constraint value is determined as an end leaf node based on a second value range of at least one leaf node included in the second child node, a leaf node corresponding to the minimum constraint value is determined as a start leaf node based on a second value range of at least one leaf node included in the third child node, and physical blocks in which the start leaf node, the end leaf node, and all leaf nodes between the start leaf node and the end leaf node are located are used as the at least one target physical block.

In some embodiments, if the sorting field in the target index directory is absent in the at least one query field, the multiple physical blocks are determined as the at least one target physical block.

If the sorting field in the target index directory is absent in the query field, the first data node cannot filter the multiple physical blocks based on the target index directory. Therefore, the multiple physical blocks may be directly determined as the at least one physical block.

It should be noted that the foregoing descriptions are provided by using an example in which the data query condition includes the constraint condition of the at least one query field. In actual application, the data query condition may not include the constraint condition of the query field. In this case, a data query instruction instructs the first data node to perform full-table query on the target base table indicated by the base table identifier, or the target index directory indicated by the index directory identifier. If the data query condition includes the base table identifier, the first data node uses, as the at least one target physical block, multiple physical blocks in which the target base table indicated by the base table identifier is located; or if the data query condition includes the index directory identifier, the first data node uses, as the at least one target physical block, multiple physical blocks in which the target index directory indicated by the index directory identifier is located.

In actual application, the database further includes a coordinator node. Before determining the at least one target physical block from the multiple physical blocks based on the data query condition, the first data node may further receive a data query instruction sent by the coordinator node, where the data query instruction is determined by the coordinator node based on a data query request sent by a user, and the data query instruction includes the data query condition.

Optionally, when the user needs to query data, the user can send the data query request to the coordinator node, where the data query request indicates a base table in which the to-be-queried data of the user is located and a constraint condition of the to-be-queried data of the user. In this case, the coordinator node in the database determines, based on the base table in which the to-be-queried data of the user is located, distribution, in a data node, of the base table in which the to-be-queried data of the user is located, determines, from data nodes included in the database based on the distribution and the constraint condition of the to-be-queried data of the user, at least one second data node that needs to perform data query, and determines a data query instruction respectively corresponding to the at least one second data node. For each of the at least one second data node, the coordinator node sends a data query instruction corresponding to the second data node to the second data node, to instruct the second data node to perform data query and whether to perform data query in a parallel scanning manner.

In some embodiments, the at least one second data node includes at least one first data node, and a data query instruction corresponding to the first data node instructs the first data node to perform data query in a parallel scanning manner. In this case, the first data node can receive the data query instruction sent by the coordinator node.

It should be noted that in the foregoing descriptions, the coordinator node determines the at least one second data node based on the data query request sent by the user, and generates the corresponding data query instruction for the at least one second data node. However, in actual application, alternatively, the coordinator node may determine the at least one second data node based on the data query request sent by the user, and send the data query request to each second data node, and each second data node autonomously determines, based on the data query request sent by the coordinator node, the data query condition of the second data node and whether to perform data query in a parallel scanning manner. This is not limited in this embodiment of this application.

**Step 302:** Allocate the at least one target physical block to multiple processing units based on a total quantity of the at least one target physical block and a quantity of parallel processing units, where the multiple processing units are processing units that perform data query in a parallel scanning manner, and the quantity of parallel processing units is a quantity of the multiple processing units.

It should be noted that the multiple processing units in this embodiment of this application may be multiple processes in the first data node or may be multiple threads in the first data node. This is not limited in this embodiment of this application.

In some embodiments, the total quantity of the at least one target physical block is divided by the quantity of parallel processing units to obtain a candidate quantity, and if the candidate quantity is an integer, the at least one target physical block is allocated to the multiple processing units based on the candidate quantity, so that a quantity of target physical blocks allocated to each processing unit is the candidate quantity.

Optionally, if the candidate quantity is not the integer, the candidate quantity is rounded up to obtain a target quantity, and the at least one target physical block is allocated to the multiple processing units based on the target quantity and the quantity of parallel processing units, so that the quantity of target physical blocks allocated to each processing unit is not greater than the target quantity.

The at least one target physical block is allocated to N processing units in the multiple processing units based on the target quantity, so that quantities of target physical blocks allocated to the N processing units are the target quantity, where N is equal to the quantity of parallel processing units minus 1. If a value obtained by N multiplied by the target quantity is less than the total quantity of the at least one target physical block, the at least one target physical block is allocated to a remaining processing unit based on a first difference, where the remaining processing unit is a processing unit in the multiple processing units except the N processing units, and the first difference is a difference between the value obtained by N multiplied by the target quantity and the total quantity of the at least one target physical block. If the value obtained by N multiplied by the target quantity is not less than the total quantity of the at least one target physical block, the target physical block is not allocated to the remaining processing unit.

If the value obtained by N multiplied by the target quantity is less than the total quantity of the at least one target physical block, it indicates that a total quantity of physical blocks allocated to the N processing units is less than the total quantity of the at least one target physical block, there is still an unallocated physical block in the at least one target physical block, and a quantity of unallocated physical blocks is the first difference. Therefore, target physical blocks whose quantity is the first difference may be allocated to the remaining processing unit. If the value obtained by N multiplied by the target quantity is not less than the total quantity of the at least one target physical block, it indicates that the total quantity of physical blocks allocated to the N processing units is not less than the total quantity of the at least one target physical block, and there is no unallocated physical block in the at least one target physical block. Therefore, the target physical block may not be allocated to the remaining processing unit.

Based on the foregoing descriptions, when the candidate quantity is not the integer, the candidate quantity may be rounded up. In actual application, alternatively, the candidate quantity may be rounded down to obtain a target quantity. In this case, a quantity of target physical blocks allocated to at least one of the multiple threads is not greater than the target quantity. This is not limited in this embodiment of this application.

In some embodiments, before allocating the at least one target physical block to the multiple processing units based on the total quantity of the at least one target physical block and the quantity of parallel processing units, the first data node needs to determine the quantity of parallel processing units.

In some embodiments, the data query instruction further includes the quantity of parallel processing units. In this case, the first data node can determine the quantity of parallel processing units. Certainly, in actual application, the first data node may also store the quantity of parallel processing units. In this case, the first data node can also directly determine the quantity of parallel processing units.

Based on the foregoing descriptions, the quantity of parallel processing units may be included in the data query instruction and sent by the coordinator node to the first data node. Certainly, in actual application, the quantity of parallel processing units may not be included in the data query instruction. Instead, before the first node allocates the at least one target physical block to the multiple processing units based on the total quantity of the at least one target physical block and the quantity of parallel processing units, the coordinator node additionally sends the quantity of parallel processing units to the first data node. This is not limited in this embodiment of this application.

**Step 303:** Scan, by using the multiple processing units, the target physical block allocated to the respective processing unit, and determine, based on a scanning result of the multiple processing units, data that meets the data query condition.

Based on the foregoing descriptions, because the first data node may query data from the target base table, or may query data from the target index directory, in different cases, manners of scanning, by using the multiple processing units, the target physical block allocated to the respective processing unit, and determining, based on the scanning result of the multiple processing units, the data that meets the data query condition are different.

**When the first data node queries the data from the target base table,** the multiple processing units can scan the target physical block allocated to the respective processing unit, and determine the data that meets the data query condition from the at least one target physical block.

In actual application, a leaf node of the target index directory may store data identifiers respectively corresponding to indexes in a second value range of the leaf node, or the leaf node may store specific data respectively corresponding to the indexes in the second value range of the leaf node, where the data identifier can indicate data corresponding to the index. For example, a primary key index directory is usually used to store specific data corresponding to the index in the leaf node.

**When the first data node queries the data from the target index directory,** if content stored in leaf nodes of the target index directory is different, manners in which the multiple processing units can scan the target physical block allocated to the respective processing unit, and determine the data that meets the data query condition from the at least one target physical block are different. The following separately provides descriptions.

If the leaf node of the target index directory stores the specific data corresponding to the index, the multiple processing units can scan the target physical block allocated to the respective processing unit, and determine the data that meets the data query condition from the at least one target physical block.

If the leaf node of the target index directory stores the data identifier corresponding to the index, the multiple processing units can scan the target physical block allocated to the respective processing unit. For each of the multiple processing units, the processing unit can determine a data identifier respectively corresponding to at least one index that meets the data query condition in the at least one target physical block, and perform table lookup based on the at least one data identifier, to obtain the data that meets the data query condition.

In some embodiments, the data identifier is a physical address of data, and the first data node supports multiple processing units in simultaneously performing a read operation on a same physical block. In this case, the multiple processing units can perform table lookup based on a physical address of at least one piece of data respectively corresponding to the multiple processing units, to obtain data that meets the data query condition.

In some other embodiments, the data identifier is a physical address of data, and the first data node does not support multiple processing units in simultaneously performing a read operation on a same physical block. In this case, the first data node stores a start physical address and an end physical address of each physical block. In this case, the first data node can gather a physical address of at least one piece of data respectively corresponding to the multiple processing units, determine, based on physical addresses of the multiple pieces of data and the start physical address and the end physical address of each physical block, multiple second physical blocks on which a read operation needs to be performed and a total quantity of the multiple second physical blocks, then allocate the at least one second physical block to multiple processing units based on the total quantity of the multiple second physical blocks and a quantity of parallel processing units, and scan, by using the multiple processing units, the second physical block allocated to the respective processing unit, to obtain data that meets the data query condition.

An implementation of allocating the at least one second physical block to the multiple processing units based on the total quantity of the multiple second physical blocks and the quantity of parallel processing units is similar to the foregoing implementation of allocating the at least one target physical block to the multiple processing units based on the total quantity of the at least one target physical block and the quantity of parallel processing units. For a detailed implementation procedure, refer to the foregoing related content. Details are not described herein again.

In actual application, the data identifier may alternatively be a primary key value of data. In this case, the database further stores a primary key index directory of the target base table, and the primary key value is used to obtain data corresponding to the primary key value from a leaf node of the primary key index directory.

Optionally, after determining, based on the scanning result of the multiple processing units, the data that meets the data query condition, the first data node may further determine a data query result based on the data that meets the data query condition, and then send the data query result to the coordinator node.

In some embodiments, after determining the data that meets the data query condition, the first data node further needs to process the data that meets the data query condition, for example, perform summation. In this case, the first data node can further process, based on an actual situation and a related algorithm, the data that meets the data query condition, to obtain the data query result.

In actual application, before scanning, by using the multiple processing units, the target physical block allocated to the respective processing unit, the first data node needs to start the multiple processing units, and the quantity of the multiple processing units is the same as the quantity of the parallel processing units. After the multiple processing units are started, the target physical block allocated to the respective processing unit can be scanned by using the multiple processing units.

It should be noted that the multiple processing units may be started before step 301 is performed, or may be started before step 303 is performed. This is not limited in this embodiment of this application. If the multiple processing units are started before step 301 is performed, any processing unit may be selected from the multiple processing units to perform steps 301 and 302.

For ease of description, the processing unit that performs steps 301 and 302 in the multiple processing units is subsequently referred to as a first processing unit. After the first processing unit allocates the at least one target physical block to the multiple processing units, the first processing unit can put an allocation result of the at least one target physical block into a shared memory, so that the multiple processing units can read, from the shared memory, the target physical blocks corresponding to the multiple processing units.

It should be further noted that after the multiple processing units each obtain the scanning result of the processing unit, the multiple processing units each can send the scanning result of the processing unit to a second processing unit. The second processing unit may be any one of the multiple processing units, or may be a processing unit other than the multiple processing units. The second processing unit (also referred to as a gather processing unit) is configured to gather data of the multiple processing units.

For example, when the multiple processing units are multiple threads, with reference to FIG. 4, the multiple threads are threads 1 to 3, target physical blocks allocated to the thread 1 are physical blocks 1 to 3, target physical blocks allocated to the thread 2 are physical block 4 to 6, and target physical blocks allocated to the thread 3 are physical blocks 7 to 9. After completing scanning, the threads 1 to 3 each can send a scanning result of the thread to a gather thread (that is, the foregoing gather processing unit), so that the gather thread gathers data of the multiple threads.

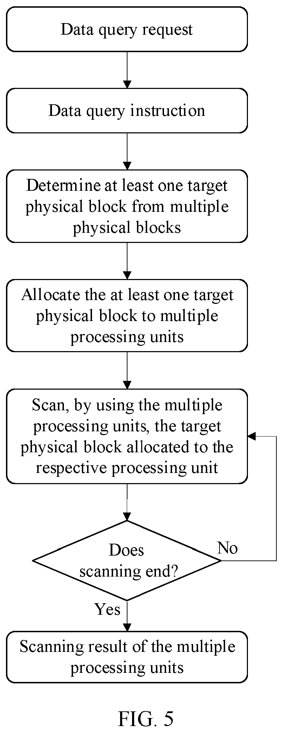

Next, the parallel scanning method provided in embodiments of this application is further described by using FIG. 5.

When a user needs to query data, the user can send a data query request to a coordinator node. The coordinator node determines, from multiple data nodes based on the data query request sent by the user, at least one second data node that needs to perform data query, and determines a data query instruction respectively corresponding to the at least one second data node, the at least one second data node includes at least one first data node, the data query instruction corresponding to the first data node instructs the first data node to perform data query in a parallel scanning manner, and the data query instruction includes a data query condition. In this case, for each of the at least one first data node, after receiving the data query instruction sent by the coordinator node, the first data node can determine at least one target physical block from the multiple physical blocks based on the data query condition, then allocate the at least one target physical block to multiple processing units based on a total quantity of the at least one target physical block and a quantity of parallel processing units, where the multiple processing units are processing units that perform data query in a parallel scanning manner, scan, by using the multiple processing units, the target physical block allocated to the respective processing unit, after scanning ends, determine, based on a scanning result of the multiple processing units, data that meets the data query condition, and further determine a data query result based on the data that meets the data query condition.

The following specifically describes, by using an example, the parallel scanning method provided in embodiments of this application.

Embodiments of this application may be applied to a database corresponding to an enrollment system of a school. A portfolio (portfolio) shown in Table 1 exists in the enrollment system, and a table attribute of the portfolio is shown in Table 2. In Table 1, the portfolio includes four fields: a studentid field, a docid field, a name field, and a classid field. It can be learned from Table 2 that, a data type of the studentid field is an integer (integer), a data type of the docid field is a string of a maximum of 10 characters, a data type of the name field is a string of a variable length, and a length of the name field is a maximum of 50 characters, a data type of the classid field is the integer, and a primary key of the portfolio is studentid and classid. In other words, a primary key index directory (portfolio_idx) of the portfolio is a joint index of studentid and classid, and studentid is a sorting field of the primary key index directory.

**Table 1**

| studentid | docid | name | classid |
|---|---|---|---|
| 1 | D100101 | Alan | 11 |
| 2 | D10C132 | Bob | 12 |
| 3 | D100Z77 | Cathy | 13 |
| 4 | D1A0189 | Douglas | 13 |
| ... | ... | ... | ... |

**Table 2**

| Table name | Portfolio (portfolio) | | |
|---|---|---|---|
| Attribute column | Column name (field name) | Data type | Remarks |
| 1 | studentid | integer | Student ID, primary key column 1 |
| 2 | docid | char(10) | Student record ID, primary key column 2 |
| 3 | name | varchar(50) | Student name |
| 4 | classid | integer | Class ID |
| Primary key | (studentid, classid) | | |

The following describes, by using the following examples 1 to 5 and by using an example in which the multiple processing units are multiple threads, a procedure in which the database corresponding to the enrollment system performs data query.

Example 1: A user wants to query a class ID of a student whose student ID is 1000. In this case, the user sends a data query request select classid from portfolio where studentid = 1000 to a coordinator node. After receiving the data query request, the coordinator node can determine at least one second data node that needs to perform data query, and determine a data query instruction respectively corresponding to the at least one second data node, the at least one second data node includes at least one first data node, and a data query instruction corresponding to the first data node instructs the first data node to perform data query in a parallel scanning manner. The data query instruction corresponding to the first data node is shown below.

```
Streaming(type: LOCAL GATHER dop: 1/2)
                 -> Index Only Scan using portfolio_idx on portfolio
                      Index Cond: (studentid = 1000)
```

The data query instruction instructs the first data node to start two threads to perform parallel scanning, retrieve, from a table named "portfolio", all records with studentid equal to 1000 by using an index directory named "portfolio_idx", and perform processing in a streaming manner, where a degree of parallelism is 1/2. The degree of parallelism being 1/2 indicates that any one of the two threads is selected as a second thread to perform data gathering.

A query field in the data query instruction is studentid, a constraint condition of the query field is student = 1000, an index directory identifier is portfolio_idx, and a quantity of parallel threads is 2.

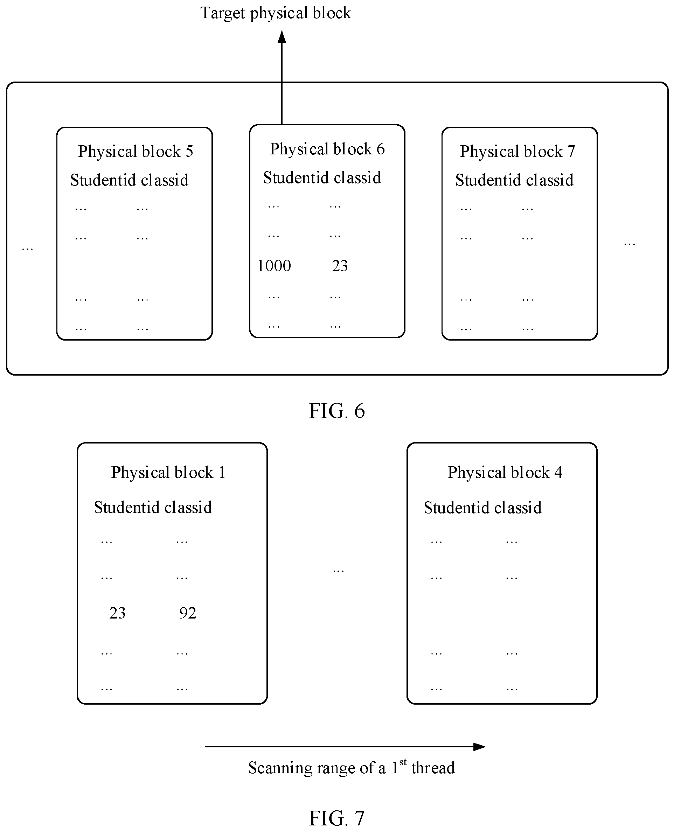

Refer to FIG. 6. A first thread (that is, the foregoing first processing unit) determines, based on the constraint condition of the sorting field and the target index directory, that the target physical block is a physical block 6. A total quantity of target physical blocks is divided by the quantity of parallel threads, that is, 1 is divided by 2, to obtain a candidate quantity 0.5. Because the candidate quantity is not an integer, the candidate quantity is rounded up to obtain a target quantity 1, and a quantity of target physical blocks allocated to a 1^{st} thread is 1. Because a value obtained by 1 multiplied by 1 is not less than the total quantity of the at least one target physical block, the target physical block is not allocated to a 2^{nd} thread. Therefore, the first thread can put an allocation result of the at least one target physical block into a shared memory, so that the two threads can read, from the shared memory, the target physical block corresponding to the two threads. The allocation result is that the physical block allocated to the 1^{st} thread is a physical block 6, and no physical block is allocated to the second thread. The 1^{st} thread scans the physical block 6 to obtain a piece of data with studentid = 1000, where the data is 23, and sends the data to the second thread. The second thread gathers scanning results of the first thread and the second thread, and returns 23 to the coordinator node. The coordinator node returns 23 to the user.

Example 2: A user wants to query a quantity of students whose student IDs range from 23 to 1500. In this case, the user can send a data query request select count(*) from portfolio where studentid >= 23 AND studentid <= 1500 to a coordinator node. After receiving the data query request, the coordinator node can determine at least one second data node that needs to perform data query, and determine a data query instruction respectively corresponding to the at least one second data node, the at least one second data node includes at least one first data node, and a data query instruction corresponding to the first data node instructs the first data node to perform data query in a parallel scanning manner. The data query instruction corresponding to the first data node is shown below.

Aggregate

```
                 -> Streaming(type: LOCAL GATHER dop: 1/2)
                    -> Aggregate
                          -> Index Only Scan using portfolio_idx on portfolio
                             Index Cond: ((studentid >= 23) AND (studentid <= 1500))
```

The data query instruction instructs the first data node to start two threads to perform parallel scanning, retrieve, from a table named "portfolio", a total quantity of all records with studentid greater than and equal to 23 and less than and equal to 1500 by using an index directory named "portfolio_idx", and perform processing in a streaming manner, where a degree of parallelism is 1/2. The degree of parallelism being 1/2 indicates that any one of the two threads is selected as a second thread to perform data gathering.

A query field in the data query instruction is studentid, a constraint condition of the query field is (studentid >= 23) AND (studentid <= 1500), an index directory identifier is portfolio_idx, and a quantity of parallel threads is 2.

The first thread determines, based on the constraint condition of the sorting field and the target index directory, that the target physical blocks are physical blocks 1 to 9. A total quantity of target physical blocks is divided by the quantity of parallel threads, that is, 9 is divided by 2, to obtain a candidate quantity 4.5. Because the candidate quantity is not an integer, the candidate quantity is rounded down to obtain a target quantity 4, and a quantity of target physical blocks allocated to a 1^{st} thread is 4. Because a value obtained by 1 multiplied by 4 is less than the total quantity of the at least one target physical block, the at least one target physical block is allocated to a 2^{nd} thread based on a first difference, and a quantity of target physical blocks allocated to the 2^{nd} thread is 5. The first thread can put an allocation result of the at least one target physical block into a shared memory, so that the two threads can read, from the shared memory, the target physical blocks corresponding to the two threads. The allocation result is that the physical blocks allocated to the 1^{st} thread are physical blocks 1 to 4, and the physical blocks allocated to the second thread are physical blocks 5 to 9.

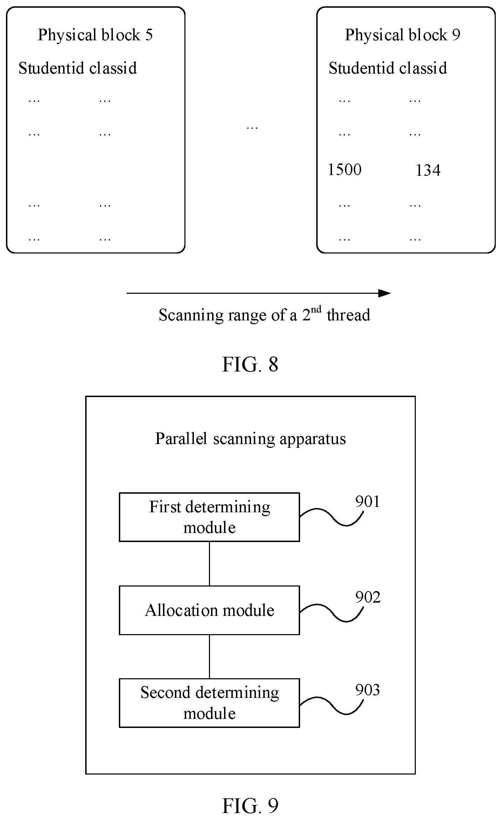

Refer to FIG. 7. A 1^{st} thread scans, starting from a tuple with studentid >= 23 in a physical block 1, to an end of a block number 4, and counts tuples that meet a condition. Refer to FIG. 8. A 2^{nd} thread scans, starting from a start position of a physical block 5, to a last tuple with studentid <= 1500 in a physical block 9, and counts tuples that meet a condition. The second thread gathers scanning results of various threads, to obtain that the quantity of students whose student IDs range from 23 to 1500 is 1478, the second thread returns 1478 to the coordinator node, and the coordinator node returns 1478 to the user.

Example 3: A user wants to query a quantity of students with class ID being 19, 23, 45, 80, 100, 150, 151, 170, 187, 195, 199. In this case, the user can send a data query request select /*+indexonlyscan(portfolio portfolio_idx) */ count(*) from portfolio where classid in (19, 23, 45, 80, 100, 150, 151, 170, 187, 195, 199) to a coordinator node. After receiving the data query request, the coordinator node can determine at least one second data node that needs to perform data query, and determine a data query instruction respectively corresponding to the at least one second data node, the at least one second data node includes at least one first data node, and a data query instruction corresponding to the first data node instructs the first data node to perform data query in a parallel scanning manner. The data query instruction corresponding to the first data node is shown below.

Aggregate

```
         -> Streaming(type: LOCAL GATHER dop: 1/2)
             -> Aggregate
                  -> Index Only Scan using portfolio_idx on portfolio
                          Index Cond: (classid = ANY ('{19, 23, 45, 80, 100, 150, 151, 170,
 187, 195, 199}'::integer[]))
```

The data query instruction instructs the first data node to start two threads to perform parallel scanning, retrieve, from a table named "portfolio", a total quantity of students with classid equal to 19, 23, 45, 80, 100, 150, 151, 170, 187, 195, 199 by using an index directory named "portfolio_idx", and perform processing in a streaming manner, where a degree of parallelism is 1/2. The degree of parallelism being 1/2 indicates that any one of the two threads is selected as a second thread to perform data gathering.

A query field in the data query instruction is classid, a constraint condition of the query field is classid = ANY {19, 23, 45, 80, 100, 150, 151, 170, 187, 195, 199}, an index directory identifier is portfolio_idx, and a quantity of parallel threads is 2.

Because the sorting field in the target index directory is absent in the query field, the multiple physical blocks are determined as the at least one physical block, that is, the at least one target physical block is physical blocks 1 to 100. Refer to FIG. 000. Physical blocks allocated to a 1^{st} thread are physical blocks 1 to 50. Physical blocks allocated to a second thread are physical blocks 51 to 100. Finally, it is obtained that the quantity of students with class ID being 19, 23, 45, 80, 100, 150, 151, 170, 187, 195, 199 is 1089. 1089 is returned to the coordinator node, and the coordinator node returns 1089 to the user.

Example 4: A user wants to query a quantity of students whose student id column is not null. In this case, the user can send a data query request select count(*) from portfolio where studentid is not null to a coordinator node. After receiving the data query request, the coordinator node can determine at least one second data node that needs to perform data query, and determine a data query instruction respectively corresponding to the at least one second data node, the at least one second data node includes at least one first data node, and a data query instruction corresponding to the first data node instructs the first data node to perform data query in a parallel scanning manner. The data query instruction corresponding to the first data node is shown below.

Aggregate

```
               -> Streaming(type: LOCAL GATHER dop: 1/2)
                  -> Aggregate
                      -> Index Only Scan using portfolio_idx on portfolio
                          Index Cond: (studentid IS NOT NULL)
```

The data query instruction instructs the first data node to start two threads to perform parallel scanning, retrieve, from a table named "portfolio", a total quantity of students with studentid IS NOT NULL by using an index directory named "portfolio_idx", and perform processing in a streaming manner, where a degree of parallelism is 1/2. The degree of parallelism being 1/2 indicates that any one of the two threads is selected as a second thread to perform data gathering.

A query field in the data query instruction is classid, a constraint condition of the query field is that studentid IS NOT NULL, an index directory identifier is portfolio_idx, and a quantity of parallel threads is 2.

The first data node determines that the at least one target physical block is physical blocks 1 to 100, and finally obtains that the quantity of students with studentid is not null is 20000. The second thread returns 20000 to the coordinator node, and the coordinator node returns 20000 to the user.

Example 5: A user wants to query a quantity of students whose student id is equal to class id. In this case, the user can send a data query request select count(*) from portfolio as t0 where exists (select 1 from portfolio as t where t0.studentid = t.classid) to a coordinator node. After receiving the data query request, the coordinator node can determine at least one second data node that needs to perform data query, and determine a data query instruction respectively corresponding to the at least one second data node, the at least one second data node includes at least one first data node, and a data query instruction corresponding to the first data node instructs the first data node to perform data query in a parallel scanning manner. The data query instruction corresponding to the first data node is shown below.

Aggregate

```
           -> Streaming(type: LOCAL GATHER dop: 1/2)
               -> Aggregate
                  -> Nested Loop Semi Join
                      Join Filter: (t0.studentid = t.classid)
                      -> Streaming(type: LOCAL REDISTRIBUTE dop: 2/2)
                          -> Index Only Scan using portfolio_idx on portfolio t0
                      -> Materialize
                          -> Streaming(type: LOCAL REDISTRIBUTE dop: 2/2)
                             -> Seq Scan on portfolio t
```

The data query instruction instructs the first data node to start two threads to perform parallel scanning, retrieve, from a table named "portfolio", a total number of students with t0.studentid = t.classid by using an index directory named "portfolio_idx", and perform processing in a streaming manner, where a degree of parallelism is 1/2. The degree of parallelism being 1/2 indicates that any one of the two threads is selected as a second thread to perform data gathering.

Query fields in the data query instruction are classid and studentid, a constraint condition of the query fields is t0.studentid = t.classid, an index directory identifier is portfolio_idx, and a quantity of parallel threads is 2. The at least one target physical block is physical blocks 1 to 100. The first data node determines that the finally obtained quantity of students with studentid = classid is 200, the second thread returns 200 to the coordinator node, and the coordinator node returns 200 to the user.

It should be noted that the foregoing examples do not constitute a limitation on usage scenarios of the parallel scanning method provided in embodiments of this application, and the technical solutions provided in embodiments of this application are also applicable to other similar technical problems.

In this embodiment of this application, the at least one target physical block can be determined from the multiple physical blocks based on the data query condition. Because the target physical block can be the physical block related to the to-be-queried data, a waste of compute resources of threads can be effectively avoided, and data query efficiency of the database can be improved. In addition, in this embodiment of this application, the at least one target physical block can be further allocated to multiple threads based on the total quantity of the at least one target physical block and a quantity of parallel threads. Compared with related technologies in which tasks need to be obtained serially, in this embodiment of this application, there is no need to obtain tasks serially, and each thread can scan a target physical block allocated to the thread, thereby greatly improving data query efficiency and improving user experience. In addition, because the target index directory is constructed based on the sorting field (also referred to as an index field), if the sorting field in the target index directory is present in the query field, the first data node can directly select, from the target index directory based on the constraint condition of the sorting field, the index that meets the constraint condition of the sorting field. In this way, an index that does not meet the constraint condition of the sorting field can be filtered out, to effectively avoid the waste of the compute resources of the threads and improve data query efficiency of the database.

FIG. 9 is a diagram of a structure of a parallel scanning apparatus according to an embodiment of this application. The parallel scanning apparatus may be implemented as a part or all of the foregoing first data node by using software, hardware, or a combination of software and hardware. The first data node includes multiple physical blocks. Refer to FIG. 9. The apparatus includes a first determining module 901, an allocation module 902, and a second determining module 903.

The first determining module 901 is configured to determine at least one target physical block from the multiple physical blocks based on a data query condition, where the target physical block is a physical block related to to-be-queried data, and the data query condition is a condition met by the to-be-queried data. For a detailed implementation procedure, refer to corresponding content in the foregoing embodiments. Details are not described herein again.

The allocation module 902 is configured to allocate the at least one target physical block to multiple processing units based on a total quantity of the at least one target physical block and a quantity of parallel processing units, where the multiple processing units are processing units that perform data query in a parallel scanning manner, and the quantity of parallel processing units is a quantity of the multiple processing units. For a detailed implementation procedure, refer to corresponding content in the foregoing embodiments. Details are not described herein again.

The second determining module 903 is configured to scan, by using the multiple processing units, the target physical block allocated to the respective processing unit, and determine, based on a scanning result of the multiple processing units, data that meets the data query condition. For a detailed implementation procedure, refer to corresponding content in the foregoing embodiments. Details are not described herein again.

Optionally, the data query condition includes a constraint condition of at least one query field and an index directory identifier, the index directory identifier indicates a target index directory, the target index directory is an index directory constructed based on data stored in the first data node, and the multiple physical blocks are used to store the target index directory.

The first determining module 901 is specifically configured to:
if a sorting field in the target index directory is present in the at least one query field, determine the at least one target physical block from the multiple physical blocks based on a constraint condition of the sorting field and the target index directory, where an index stored in the target physical block meets the constraint condition of the sorting field.

Optionally, the first determining module 901 is specifically configured to:
if the sorting field in the target index directory is absent in the at least one query field, determine the multiple physical blocks as the at least one target physical block.

Optionally, the allocation module 902 is specifically configured to:
divide the total quantity of the at least one target physical block by the quantity of parallel processing units to obtain a candidate quantity; and
if the candidate quantity is an integer, allocate the at least one target physical block to the multiple processing units based on the candidate quantity, so that a quantity of target physical blocks allocated to each processing unit is the candidate quantity.

Optionally, the allocation module 902 is specifically configured to:
if the candidate quantity is not the integer, round up the candidate quantity to obtain a target quantity; and
allocate the at least one target physical block to the multiple processing units based on the target quantity and the quantity of parallel processing units, so that the quantity of target physical blocks allocated to each processing unit is not greater than the target quantity.

Optionally, a database further includes a coordinator node, and the apparatus further includes:
a receiving module, configured to receive a data query instruction sent by the coordinator node, where the data query instruction is determined by the coordinator node based on a data query request sent by a user, and the data query instruction includes the data query condition.

Optionally, the data query instruction further includes the quantity of parallel processing units.

Optionally, the apparatus further includes:
a third determining module, configured to determine a data query result based on the data that meets the data query condition; and
a sending module, configured to send the data query result to the coordinator node.

Optionally, the multiple processing units are multiple processes in the first data node or multiple threads in the first data node.

In this embodiment of this application, because the target physical block can be the physical block related to the to-be-queried data, a waste of compute resources of threads can be effectively avoided, and data query efficiency of the database can be improved. In addition, in this embodiment of this application, the at least one target physical block can be further allocated to multiple threads based on the total quantity of the at least one target physical block and a quantity of parallel threads. Compared with related technologies in which tasks need to be obtained serially, in this embodiment of this application, there is no need to obtain tasks serially, and each thread can scan a target physical block allocated to the thread, thereby greatly improving data query efficiency and improving user experience. In addition, because the target index directory is constructed based on the sorting field (also referred to as an index field), if the sorting field in the target index directory is present in the query field, the first data node can directly select, from the target index directory based on the constraint condition of the sorting field, the index that meets the constraint condition of the sorting field. In this way, an index that does not meet the constraint condition of the sorting field can be filtered out, to effectively avoid the waste of the compute resources of the threads and improve data query efficiency of the database.

It should be noted that when the parallel scanning apparatus provided in the foregoing embodiment performs parallel scanning, division into the foregoing functional modules is merely used as an example for description. During actual application, the foregoing functions may be allocated to different functional modules for implementation based on a requirement. In other words, the apparatus is divided into different functional modules in terms of an inner structure, to implement all or some of the functions described above. In addition, the parallel scanning apparatus provided in the foregoing embodiment and the parallel scanning method embodiment belong to a same concept. For a specific implementation procedure of the parallel scanning apparatus, refer to the method embodiment. Details are not described herein again.

An embodiment of this application further provides a computer-readable storage medium. The storage medium stores instructions, and when the instructions are run on a computer, the computer is enabled to perform steps of the parallel scanning method in the foregoing embodiment.

An embodiment of this application further provides a computer program product including instructions. When the instructions are run on a computer, the computer is enabled to perform steps of the parallel scanning method in the foregoing embodiment. In other words, a computer program is provided. When the computer program is run on a computer, the computer is enabled to perform steps of the parallel scanning method in the foregoing embodiment.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, that is, may be a non-transitory storage medium.

It should be understood that "multiple" in this specification means two or more. In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and regions. For example, all data query conditions in embodiments of this application are obtained with full authorization.

The foregoing descriptions are merely embodiments of this application, but are not intended to limit this application. Any modification, equivalent replacement, or improvement made without departing from the spirit and principle of this application should fall within the protection scope of this application.

## Claims

1. A parallel scanning method, applied to a first data node comprised in a database, wherein the first data node comprises multiple physical blocks, and the method comprises:
determining at least one target physical block from the multiple physical blocks based on a data query condition, wherein the target physical block is a physical block related to to-be-queried data, and the data query condition is a condition met by the to-be-queried data;
allocating the at least one target physical block to multiple processing units based on a total quantity of the at least one target physical block and a quantity of parallel processing units, wherein the multiple processing units are processing units that perform data query in a parallel scanning manner, and the quantity of parallel processing units is a quantity of the multiple processing units; and
scanning, by using the multiple processing units, the target physical block allocated to the respective processing unit, and determining, based on a scanning result of the multiple processing units, data that meets the data query condition.

2. The method according to claim 1, wherein the data query condition comprises a constraint condition of at least one query field and an index directory identifier, the index directory identifier indicates a target index directory, the target index directory is an index directory constructed based on data stored in the first data node, and the multiple physical blocks are used to store the target index directory; and
the determining the at least one target physical block from the multiple physical blocks based on the data query condition comprises:
if a sorting field in the target index directory is present in the at least one query field, determining the at least one target physical block from the multiple physical blocks based on a constraint condition of the sorting field and the target index directory, wherein an index stored in the target physical block meets the constraint condition of the sorting field.

3. The method according to claim 2, wherein the method further comprises:
if the sorting field in the target index directory is absent in the at least one query field, determining the multiple physical blocks as the at least one target physical block.

4. The method according to any one of claims 1 to 3, wherein the allocating the at least one target physical block to the multiple processing units based on the total quantity of the at least one target physical block and the quantity of parallel processing units comprises:
dividing the total quantity of the at least one target physical block by the quantity of parallel processing units to obtain a candidate quantity; and
if the candidate quantity is an integer, allocating the at least one target physical block to the multiple processing units based on the candidate quantity, so that a quantity of target physical blocks allocated to each processing unit is the candidate quantity.

5. The method according to claim 4, wherein the method further comprises:
if the candidate quantity is not the integer, rounding up the candidate quantity to obtain a target quantity; and
allocating the at least one target physical block to the multiple processing units based on the target quantity and the quantity of parallel processing units, so that the quantity of target physical blocks allocated to each processing unit is not greater than the target quantity.

6. The method according to any one of claims 1 to 5, wherein the database further comprises a coordinator node, and before the determining the at least one target physical block from the multiple physical blocks based on the data query condition, the method further comprises:
receiving a data query instruction sent by the coordinator node, wherein the data query instruction is determined by the coordinator node based on a data query request sent by a user, and the data query instruction comprises the data query condition.

7. The method according to claim 6, wherein the data query instruction further comprises the quantity of parallel processing units.

8. The method according to claim 6, wherein after the determining, based on the scanning result of the multiple processing units, the data that meets the data query condition, the method further comprises:
determining a data query result based on the data that meets the data query condition; and
sending the data query result to the coordinator node.

9. The method according to claims 1 to 8, wherein the multiple processing units are multiple processes in the first data node or multiple threads in the first data node.

10. A parallel scanning apparatus, applied to a first data node comprised in a database, wherein the first data node comprises multiple physical blocks, and the apparatus comprises:
a first determining module, configured to determine at least one target physical block from the multiple physical blocks based on a data query condition, wherein the target physical block is a physical block related to to-be-queried data, and the data query condition is a condition met by the to-be-queried data;
an allocation module, configured to allocate the at least one target physical block to multiple processing units based on a total quantity of the at least one target physical block and a quantity of parallel processing units, wherein the multiple processing units are processing units that perform data query in a parallel scanning manner, and the quantity of parallel processing units is a quantity of the multiple processing units; and
a second determining module, configured to scan, by using the multiple processing units, the target physical block allocated to the respective processing unit, and determine, based on a scanning result of the multiple processing units, data that meets the data query condition.

11. A computer device, wherein the computer device comprises a memory and a processor, the memory is configured to store a computer program, and the processor is configured to execute the computer program stored in the memory, to implement steps of the method according to any one of claims 1 to 9.

12. A computer-readable storage medium, wherein the storage medium stores instructions, and when the instructions are run on the computer, the computer is enabled to perform steps of the method according to any one of claims 1 to 9.

13. A computer program product comprising instructions, wherein when the instructions are run on the computer, the computer is enabled to perform steps of the method according to any one of claims 1 to 9.
